# EUROPEAN PATENT APPLICATION

(11) **EP 2 455 873 A2**
(43) Date of publication of application: **23.05.2012**
(21) Application number: 11190009.8
(22) Date of filing: 21.11.2011
(51) Int. Cl.: G06F 17/30

(54) **Method for displaying web page in a portable terminal**

(30) Priority: 22.11.2010 KR 20100116363
(71) Applicant: Samsung Electronics Co., Ltd., Suwon-si, Gyeonggi-do 442-742 (KR)
(72) Inventor: Park, Sang-Min, 442-742 Gyeonggi-do (KR)
(74) Representative: Jenkins, Richard Gavin

(57) **Abstract**

A method for displaying a Web page in a portable terminal is provided, in which a Web page to which access is requested is downloaded and divided into a body component and an input component by paring the Web page, then the body component is displayed in a predetermined area of a display of the portable terminal without being resized, and the input component is displayed resized to a predetermined size.

## Description

### BACKGROUND OF THE INVENTION

### Field of the Invention

The present invention relates to a portable terminal, and more particularly, to a method for displaying a Web page in a portable terminal.

### Description of the Related Art

In general, a portable terminal enables voice and data communication whole roaming. Owing to diverse mobile communication environments and the development of mobile communication technology, portable terminals have found their uses in a variety of fields, beyond voice calls.

For example, a portable terminal can open Audio On Demand (AOD) and Video On Demand (VOD) files, conduct a video call in real time through a camera equipped in it, download and play a game application, or allow a user to view a digital multimedia broadcast program through a Digital Multimedia Broadcasting (DMB) receiver.

As the hardware performance of portable terminals has recently rapidly increased, functions of a high-performance computer are now being implemented in the portable terminals. As such, a user can acquire necessary information from a plurality of servers including an Internet portal server through Web pages using a portable terminal.

However, when the Internet is used through a portable terminal, an accessed Web page may not be suitable for a resolution supported by the portable terminal and, as a result, the content of the Web page (e.g. an image and text) may not be viewed normally.

This problem is attributed to the fact that a Web page opened in a conventional Internet service is suitable for the screen of a desktop or laptop with a high resolution and a large screen. Thus, a portable terminal with a low resolution and a small screen is not appropriate to display such a Web page.

To avert this problem, automatic Web page resizing and Web page scrolling have been proposed for displaying a Web page on a display of a portable terminal.

However, resizing (e.g. resizing down) is not effective in displaying the content of a Web page, thereby causing inconvenience to Internet browsing. For instance, when an image in a Web page is resized down to fit the resolution of the display of a portable terminal, pixel mismatch may occur between the resolution of the resized image and the resolution of the display. Therefore, the image is blurry and text information is too obscure to be legible.Further, since a Web page is created suitably for a high resolution, the Web page displayed through a portable terminal screen cannot be scrolled at all or a menu on the Web page cannot be selected according to the scrolling scheme.

Accordingly, aside from the resizing or scrolling scheme, there exists a need for a method for displaying a Web page made suitable for a higher resolution than a resolution supported by the display of a portable terminal in such a manner that an image and text of the Web page are clearly displayed and manipulated on the display of the portable terminal.

### SUMMARY OF THE INVENTION

An aspect of embodiments of the present invention is to address at least the problems and/or disadvantages and to provide at least the advantages described below. Accordingly, an aspect of embodiments of the present invention is to provide a method for displaying a Web page on a low-resolution display of a portable terminal so that an image and text can be clearly displayed.

In accordance with an embodiment of the present invention, there is provided a method for displaying a Web page in a portable terminal, in which a Web page to which access is requested is downloaded and divided into a body component and an input component by paring the Web page, the body component is displayed in a predetermined area of a display of the portable terminal without being resized, and the input component is displayed resized to a predetermined size.

In accordance with another embodiment of the present invention, there is provided a method for displaying a Web page in a portable terminal, in which a Web page to which access is requested is downloaded and divided into a body component and an input component by paring the Web page, the Web page divided into the body component and the input component is displayed on a screen of a display of the portable terminal, a fixed area is set for a part of the screen of the display by a user, a part of the body component is displayed in the fixed area without being resized, and the input component and the remainder of the body component are displayed resized in an area other than the fixed area.

In accordance with an embodiment of the present invention, there is provided a portable terminal for displaying a Web page in a display unit which includes: a memory; and a controller coupled to the memory and configured to: download a Web page in response to an access request; classify the downloaded Web page into a body component and an input component by paring the Web page and storing them in the memory; and display the body component in a predetermined area of a display of the portable terminal without resizing the body component, and display the input component resized to a predetermined size.

### BRIEF DESCRIPTION OF THE DRAWINGS

The above features and advantages of certain embodiments of the present invention will be more apparent from the following detailed description taken in conjunction with the accompanying drawings, in which:
FIG 1 is a block diagram of a portable terminal according to an embodiment of the present invention;
FIG 2 is a flowchart illustrating an operation for displaying a Web page according to an embodiment of the present invention;
FIGs. 3A to 3D illustrate an example of the operation for displaying a Web page according to the embodiment of the present invention illustrated in FIG 2;
FIG 4 is a flowchart illustrating an operation for displaying a Web page according to another embodiment of the present invention; and
FIGs. 5A to 5D illustrate an example of the operation for displaying a Web page according to the embodiment of the present invention illustrated in FIG 4.

Throughout the drawings, the same drawing reference numerals will be understood to refer to the same elements, features and structures.

### DETAILED DESCRIPTION OF THE INVENTION

Reference will now be made in detail to the preferred embodiments of the present invention with reference to the accompanying drawings. The following description is given only of components and/or operations required to understand the present invention and the other background art will not be described lest it should make the subject matter of the present invention obscure.

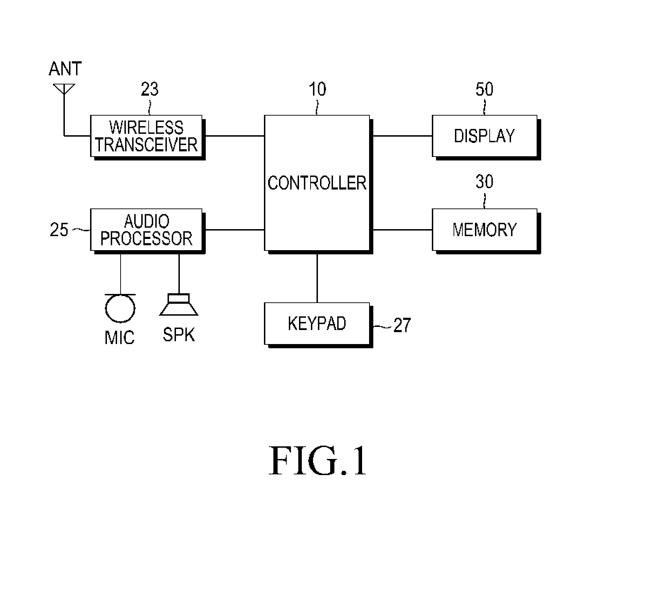

FIG 1 is a block diagram of a portable terminal according to an embodiment of the present invention. The portable terminal according to the embodiment of the present invention is a mobile electronic device that can be readily carried. The term "portable terminal" used herein covers a broad range of terminals such as a low-end portable phone (e.g. a feature phone), a smart phone, an International Mobile Telecommunications (IMT)-2000 terminal, a Wideband Code Division Multiple Access (WCDMA) terminal, a Personal Digital Assistant (PDA), a Portable Multimedia Player (PMP), a Digital Multimedia Broadcasting (DMB) terminal, a desktop computer, a laptop computer, etc..

While the portable terminal is shown in FIG 1 as not having components of such as a Global Positioning System (GPS) module, a camera module, a Bluetooth module, a Wireless Fidelity (Wi-Fi) module, an acceleration sensor, a proximity sensor, and a DMB receiver, it is clearly understood to those skilled in the art that they may be included in the portable terminal and provide their own functions.

For instance, the acceleration sensor senses the movement state of the portable terminal by measuring dynamic force such as acceleration, vibration, impact, etc. The display direction of a display of the portable terminal may be detected based on the sensed movement state of the portable terminal.

The proximity sensor senses approach of a user's body part toward the portable terminal. The sensed information of the proximity sensor may be used to prevent malfunction of the portable terminal, if the portable terminal provides a touch screen function.

A gyroscope monitors dynamic rotation of the portable terminal. It may be used in conjunction with the acceleration sensor in order to sense rotational motion of the portable terminal along six axes, specifically up and down, back and forth, side by side, and x-, y- and z-axis rotations.

Referring to FIG 1, a wireless transceiver 23 includes a Radio Frequency (RF) unit and a MODEM. The RF unit includes an RF transmitter for upconverting the frequency of a transmission signal and amplifying the upconverted signal and an RF receiver for low-noise-amplifying a received signal and downconverting the frequency of the low-noise-amplified signal. The MODEM includes a transmitter for encoding and modulating the transmission signal and a receiver for demodulating and decoding the signal received from the RF unit.

In accordance with the embodiment of the present invention, the wireless transceiver 23 provides a communication function for accessing a Web site through a Web page in response to a user's request. For example, the wireless transceiver 23 may transmit information about a user-designated Uniform Resource Locator (URL) to a server. When accessing the URL, the wireless transceiver 23 may receive data of an accessed Web page.

An audio processor 25 may include a Coder-Decoder (CODEC). The CODEC includes a data CODEC and an audio CODEC. The data CODEC processes packet data and the audio CODEC processes an audio signal such as voice and a multimedia file. The audio processor 25 reproduces an audio signal by converting a digital audio signal received from the MODEM to an analog signal through the audio CODEC, or converts an analog audio signal generated from a microphone to a digital audio signal through the audio CODEC and transmits the digital audio signal to the MODEM. The CODEC may be configured separately or incorporated into a controller 10. The audio processor 25 may output an audio part of multimedia data available on a Web page through a speaker (SPK) or an earphone (not shown).

A keypad 27 may include alphanumerical keys for entering digits and characters and function keys for setting functions. The keypad 27 may also include a touch sensor to receive a key input corresponding to a user's touch. In accordance with the embodiment of the present invention, if a display 50 is configured into a touch screen, the keypad 27 may be omitted or include a minimum number of keys. In this case, the display 50 may take charge of a part of key input functions.

A memory 30 may include a program memory and data memories. The program memory stores programs for controlling regular operations of the portable terminal. The memory 30 may include an external memory such as a Compact Flash (CF) memory card, a Secure Digital (SD) card, a micro-SD memory card, a mini-SD memory card, an eXtreme Digital (XD) card, and a memory stick. According to the embodiment of the present invention, the memory 30 stores a Web page corresponding to a URL received from the wireless transceiver 23.

The display 50 displays various types of information generated in the portable terminal. The display 50 may be various types of displays such as a Liquid Crystal Display (LCD), an Organic Light Emitting Diode (OLED) display (e.g. a Passive Matrix OLED (PMOLED) or Active Matrix OLED (AMOLED) display), etc. Alternatively, the display 50 may also be a touch screen that can be used not only as an output device but also as an input device along with the keypad 27. For example, the display 50 may receive a touch input from the user and zoom in, zoom out, scroll, and switch a displayed Web page according to the touch input.

The display 50 displays a Web page that has been parsed and then rendered by the controller 10 according to the resolution of the display 50 (e.g. a display size) in the embodiment of the present invention.

The display 50 according to the embodiment of the present invention is a display suitable for a portable terminal. Thus the display 50 may have the resolutions of Quarter Video Graphic Array (QVGA, 240x320), Wide-screen QVGA (WQVGA, 400x240, 480x272, or 480x234), Enhanced Graphic Array (EGA, 640x400), VGA (640x480), Wide VGA (WVGA, 800x480), Super VGA (SVGA, 800x600), and Wide-Screen VGA (WSVGA, 1024x600), etc.

While it is assumed that the display 50 displays information or an accessed Web page on a screen with a low resolution of 240x320 or 400x240, the above-described various resolutions (e.g. VGA, WVGA, etc.) are also available in the display 50.

The controller 10 provides overall control to the portable terminal. The controller 10 may switch one operation of the portable terminal to another operation according to a user input received through the keypad 27 or the display 50 and control the operations of the portable terminal.

In accordance with the embodiment of the present invention, upon receipt of a request to connect to a specific URL from a user, the controller 10 receives a Web page corresponding to the URL and analyzes (i.e. parses) the Web page. The controller 10 may determine the number of components, the ratio between image information (images or videos) and text information, the size, color and type of a font used for the text information, space between text, etc. on the Web page through the parsing. The controller 10 classifies the components of the Web page into (1) body components and (2) input components based on the result of the determination.

For example, the controller 10 analyzes (parses) the Web page by analyzing a tag pattern of the Web page including sources like a <body> tag, a <div> tag, and a <p> tag and calculating the layout of each component. Then, the controller 10 classifies the components of the Web page into body components and input components, then determines the display size of each component according to the width and height of the component based on the analysis. That is, the controller 10 analyzes the tag pattern(s) of the Web page including sources like a <body> tag, a <div> tag, and a <p> tag. When detecting a tag pattern or tag patterns <div>...</div>, the controller 10 may classify a part or parts corresponding to the tag pattern or tag patterns as a body component or body components of the Web page. The <body> tag refers to a whole Web page, each <div> tag refers to a divided area, and each <p> tag refers to a minimum component belonging to a <div> tag.

A body component is related to main content of a Web page that provides information to a user, including an image, a video, text, etc. The body component may be regarded as a main component of the Web page. Since the body component corresponds to content that provides information to the user, that is, the body component displays information (e.g. an image, text, etc.) on the Web page, the body component is highly likely to be set to a higher resolution than the resolution of the display 50 (e.g. 240x320). For instance, an image such as a photo on a Web page has 800x600 or more pixels, for proper display (i.e. for proper visibility) and thus is too large for the screen size (e.g. 240x320) of the display 50 of the portable terminal. Accordingly, the controller 10 may classify (or determine) a component of the Web page set to be displayed in a predetermined or larger size (e.g. a larger width and height than the resolution of the display 50) as a body component in the embodiment of the present invention.

An input component refers to a component through which a user input or user selection is made, such as a menu, an option, a check box, an address input window, a keyword input window for search, etc. The input component may be identified by parsing the syntax of the Web page. In general, an input component is set to a predetermined or lower resolution (e.g. a size with tens of or fewer pixels in height). Therefore, the controller 10 may classify (or determine) a component of the Web page set to be displayed to a size with a predetermined or smaller height as an input component in the embodiment of the present invention.

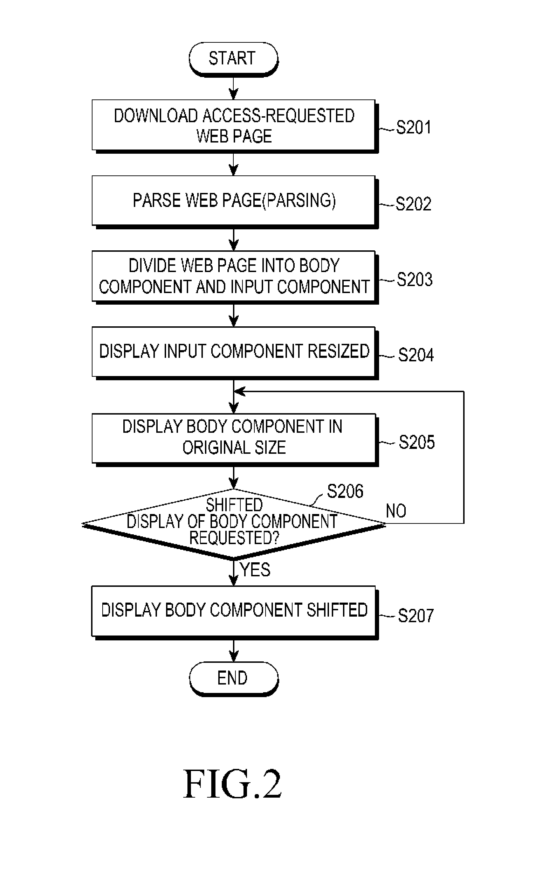

Upon completion of classifying the components of the Web page into (1) body components and (2) input components, the controller 10 controls the display of (1) body components without resizing, and the display of (2) input components through resizing according to the size of the display 50 according to an embodiment of the present invention. In another embodiment of the present invention, upon completion of classifying the components of the Web page into (1) body components and (2) input components, the controller 10 controls the display of a body component without resizing in a user-set area (e.g. a fixed area), and display of the other body components and the input components through resizing in an area other than the use-set area. These two embodiments of the present invention will be described below with reference to FIGs. 2 to 3D and FIGs. 4 to 5D, respectively.

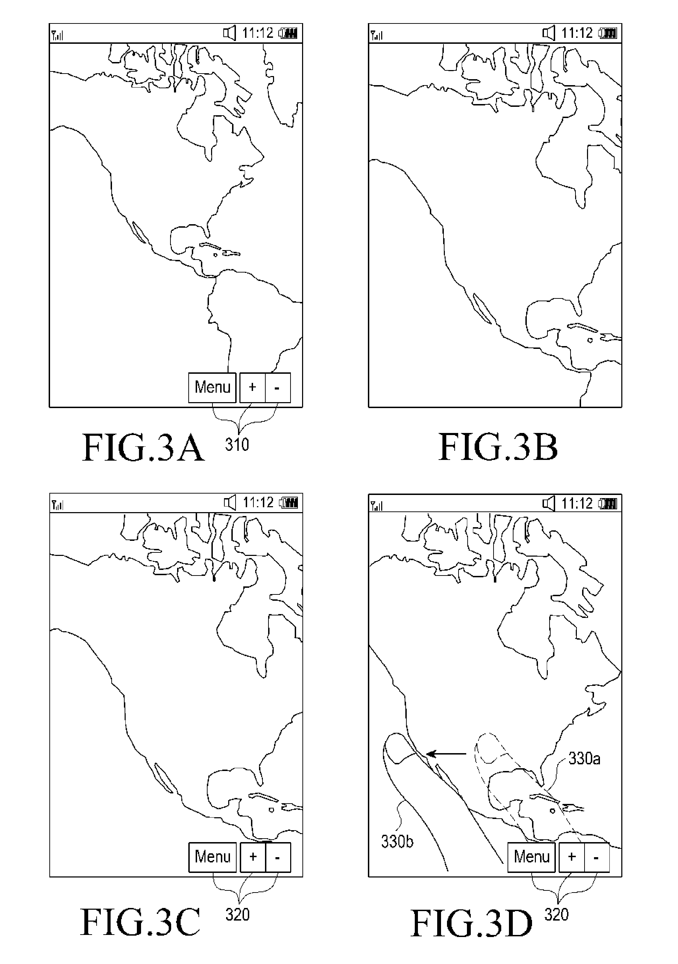

FIG 2 is a flowchart illustrating an operation for displaying a Web page according to an embodiment of the present invention, and FIGs. 3A to 3D illustrate an example of the operation for displaying a Web page according to the embodiment of the present invention illustrated in FIG 2.

Before describing the embodiment of the present invention, FIGs. 3A and 3B will first be described as these figures illustrate conventional display of a Web page.

FIG 3A illustrates an example of displaying a Web page in a device having a display of a higher resolution (e.g. 800x480) than the resolution of the display 50. FIG 3B illustrates an example of displaying an enlarged version of a resized-down Web page on a display with a low resolution (e.g. 240x400 pixels).

Referring to FIG 3A, due to the high resolution of the display, the whole Web page that provides map information can be resized (e.g. resized down) so that input components 310 including a menu and zoom-in and zoom-out by which the user can enter zoom-in and zoom-out inputs are displayed normally (e.g. clearly) along with a body component (e.g. the map information).

However, when the Web page illustrated in FIG 3A ((e.g. a Web page set to a high resolution) is displayed on the display with a low resolution, the Web page is too large for the display and thus it is resized down to fit the display. The resized-down Web page is not clear on the low-resolution display due to pixel mismatch. As a result, the user cannot view information of the Web page (e.g. the map information) normally.

Thereafter, the user may request enlargement (resizing up) of the resized-down Web page suitable for the size of the display to view the map information clearly. However, when the Web page is enlarged, the input components 310 illustrated in FIG 3A may not be included in the display, as illustrated in FIG 3B. With the exclusion of the input components 310, the user is unable to use the Web page with the absence of a control menu icon.

Now, the first embodiment of the present invention will be described hereinafter with reference to FIGs. 1 to 3.

In steps S201, S202, and S203, the controller 10 downloads an access-requested Web page and classifies the components of the Web page into a body component and an input component by parsing the Web page.

To be more specific, upon receipt of a request for accessing the URL of a specific Web page from the user, the controller 10 accesses the Web page on the Internet, downloads the Web page (e.g. the source code of the Web page) which is written in a language such as Hyper Text Markup Language (HTML), Extensible Markup Language (XML), etc. using Cascading Style Sheets (CSS) through the wireless transceiver 23, and stores the downloaded Web page in the memory 30. Then, the controller 10 analyzes the tag pattern of the components of the Web page by parsing the Web page and calculates (determines) the layout of each component. Thus, the controller 10 divides the Web page into a body component and an input component according to the embodiment of the present invention.

Meanwhile, after determining the display size (width and height) of each component of the Web page by syntax parsing and layout analysis, the controller 50 may classify a component set to a larger size than the display size of the screen of the display 50 as a body component, and a component set to a smaller size than the display size of the screen of the display 50 as an input component.
For example, since the map information (or map image) of the Web page illustrated in FIG 3A is a component with a larger display size than the screen of the display 50 according to the embodiment of the present invention, the map information is classified as a body component. That is, in case of a Web page with map information is used, it provides the map information by combining a plurality of segment images each having 255x255 pixels. If nine segment images are combined into the map information on the Web page, a 765x765 pixel size is larger than the screen size of the display of a general portable terminal. Thus, this component may be determined to be a body component. In contrast, since the components 310 of FIG 3A have a display size smaller than the screen of the display 50, they are classified as input components.

In step S204 and S205, the controller 10 controls display of the input component through resizing and controls display of the body component without resizing.

Specifically, when the Web page is classified into the body component and the input component, the controller 10 separately displays the body component and the input component according to the first embodiment of the present invention.

That is, in the first embodiment of the present invention, the controller 10 controls the body component corresponding to the map information (e.g. including a map image) of the Web page to be displayed without changing the resolution of the map information, that is, without resizing, as illustrated in FIG 3C.

For example, if the analysis tells that the body component having the map information is set to a 765x765 pixel display size, only a part of a size 240x320 of the 765x765-pixel body component is displayed without resizing according to the screen size (e.g. 240x320) of the display 50.

If the body component is displayed without resizing in this manner, all of the map information illustrated in FIG 3A cannot be displayed, but the map information can be viewed clearly due to absence of resizing-caused degradation of image quality (e.g. the quality of the map image).

As illustrated in FIG 3C, the controller 10 also displays input components 320 on the screen of the display 50 in the first embodiment of the present invention. These input components 320 are a resized version of the input components 310 of FIG 3A, fitting the display size (resolution) of the display 50.

While the input components may be displayed resized suitably for the resolution (e.g. a low resolution of 240x320) of the display 50, they may also be displayed without being resized according to the characteristics of the Web page. For instance, if an input component of a specific analyzed Web page has a low display size (e.g. a width approximate to the width of the display 50 and a height of tens of pixels), the input component may be displayed without being resized on the display 50.

In steps S206 and S207, the controller 10 determines whether the user has requested a movement of the displayed body component, and if so, moves the body component.

According to the embodiment of the present invention, as the map information (including a map image, etc.) corresponding to the body component is displayed without being resized as illustrated in FIG 3C, information provided by the body component can be clearly viewed although its displayed area is limited. Here, the controller 10 determines whether the user has requested shifted display of the body component that is displayed to the original size. Upon receipt of the user's request for shifted display of the body component, the controller 10 controls shifted display of the body component in correspondence with the shifted display request.

For example, FIG 3D illustrates shifted display of the body component (e.g. a map image) corresponding to a shifted display request issued by the user's flicking from a position 330a to a position 330b on the Web page of FIG 3C. Alternatively, , it is possible to request the shifted display of the body component using a menu or a designated key.

In the course of shifted displaying of the body component, the controller 10 may control the body component to be displayed resized or non-resized.

For example, when the user requests the shifted display of the body component by a key input or flicking on the touch screen of the display 50, the controller 10 may control the body component to be displayed without being resized in the course of shifted displaying to render the body component clear, or to be displayed resized by a predetermined amount to allow the user to readily identify the shifted direction in the course of shifted displaying.

Herein, the phrase "in the course of shifted displaying" represents a time period until before the shifted display request is completely issued. For example, a time period during which the shifted display of the body component is being requested by dragging the body component corresponds to the phrase "in the course of shifted displaying". When the displayed component is completely dragged, for example, the user's finger is removed from the screen, it may be determined that the shifted display request is completed.

That is, while a key of the keypad 23 designated for shifted displaying of a body component is being selected (or the user's finger is dragging the body component to request the shifted display of the body component) , the controller 10 may control the body component to be displayed being resized by a predetermined amount or in its original size.

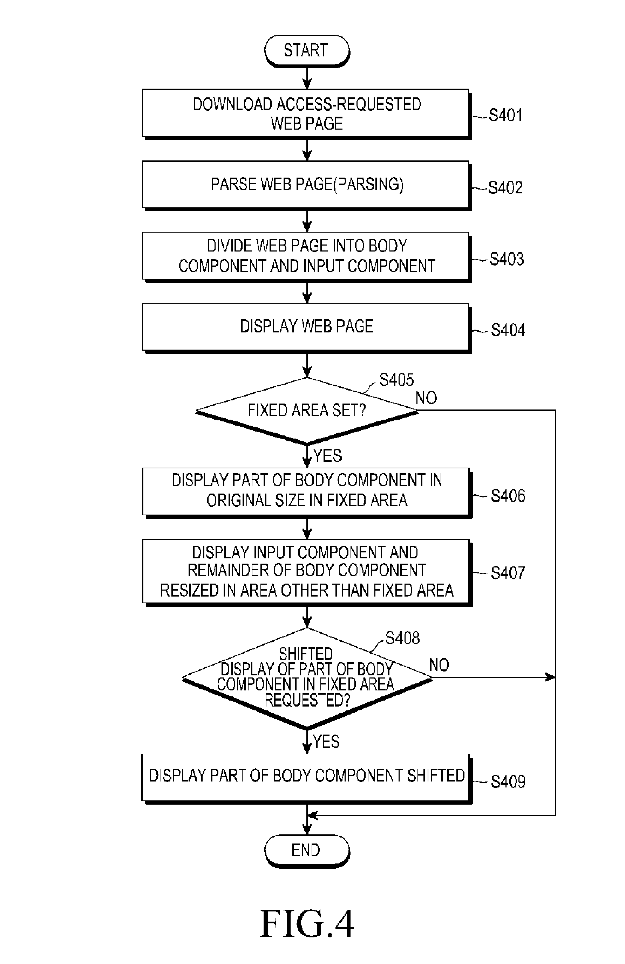

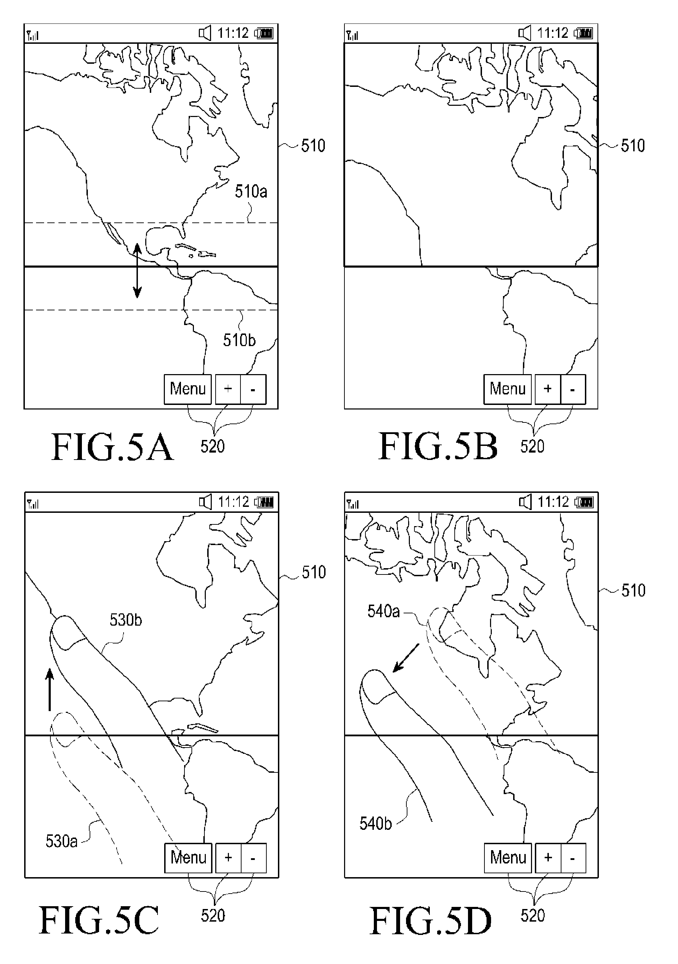

FIG 4 is a flowchart illustrating an operation for displaying a Web page in the portable terminal according to a second embodiment of the present invention, and FIGs. 5A to 5D illustrate an exemplary operation for displaying a Web page in the portable terminal according to the second embodiment of the present invention. The second embodiment of the present invention will be described below with reference to FIG 1 and FIGs. 4 to 5.

In step 5401, S402, 5403, the controller 10 downloads an access-requested Web page and separates a body component and an input component from the downloaded Web page by parsing the Web page.

Steps S401, S402 and S403 are performed in the same manner as steps S201, S202 and S203 in FIG 2 in the first embodiment of the present invention.

In steps S404 and S405, the controller 10 displays the Web page which has been divided into the body component and the input component through parsing and determines whether the user has set a fixed area.

FIG 5A illustrates a Web page divided into a body component and input components, which is displayed resized according to the screen size of the display 50. As described before with reference to FIG 2, a resized Web page may not be so clearly displayed that the user cannot view information (e.g. map information) clearly on the Web page.

Therefore, the user may set a part of the screen on which the Web page is displayed as a fixed area by a specific input. The fixed area is defined as an area in which a Web page is displayed to its original size without being resized, as shown in FIG 5B.

Hence, the user may set a fixed area so that a part of the body component selected by the fixed area (e.g. a part corresponding to North America in the map of FIG 5A) is displayed to its original size in the fixed area. Thus, the user can clearly view information of the partial body component displayed in the fixed area.For example, the user may set the fixed area 510 to an intended size 510a or 510b by a touch input or a key input, as illustrated in FIG 5A. Thus, the user may select a specific part of the body component of the resized-down Web page (e.g. a Web page scaled down to match the screen size of the display 50) as illustrated in FIG 5A by setting a fixed area 510 of a predetermined size for the body component, thus clearly able to view the selected body component part without resizing it, as shown in FIG 5B.

In steps S406 and S407, the controller 10 displays the selected part of the body component in the fixed area without being resized and displays the input component, and the remainder of the body component resized in FIG 5A to be hidden.

That is, the controller 10 detects the part of the body component, selected by the fixed area 510 on the resized-down Web page, when the fixed area 510 is set, and displays the selected part of the body component without resizing it in the fixed area 510, as shown in FIG 5B.

On the assumption that the display 50 has a low resolution in the embodiment of the present invention, the actual display size of the part of the body component selected by the fixed area is larger than the display size of the fixed area. Therefore, the controller 10 controls only a specific part matching the display size of the fixed area from the selected part of the body component to be displayed as illustrated in FIG 5B. The controller 10 can control the remainder of the body component and input components 520 to be displayed resized (e.g. resized down) according to the display size (e.g. the resolution) of the display 50.

That is, when the fixed area 510 is set on the resized Web page illustrated in FIG 5A through a predetermined user's gesture input or key input, the part of the body component selected by the fixed area 510 (above 510a or below 510b) is displayed without being resized and the remainder of the body component and the input components 520 are displayed resized or visually hidden.

In step S408 and S409, the controller 10 detects reception of a shifted display request of the body component displayed in the fixed area and controls the body component to be shifted according to the shifted display request.

Accordingly, the user may request a shift of the body component displayed in the fixed area (the body component selected by setting the fixed area) through flicking from a position 530a to another position 530b as illustrated in FIG 5C or from a position 540a to another position 540b as illustrated in FIG 5D. In this manner, the user can view the remainder of the body component which has not been displayed in FIG 5B.

As is apparent from the above description of the present invention, a Web page can be clearly displayed on a low-resolution display of a portable terminal. Therefore, a user can readily and conveniently view information on the Web page.

The above-described methods according to the present invention can be implemented in hardware, firmware or as software or computer code that can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to embodiments thereof, it will be understood by those of ordinary skill in the art that various changes in form and details may be made therein without departing from the spirit and scope of the present invention as defined by the following claims.

## Claims

1. A method for displaying a Web page in a portable terminal, comprising:
downloading a Web page in response to an access request;
dividing the downloaded Web page into a body component and an input component by paring the Web page;
displaying the body component in a predetermined area of a display of the portable terminal without resizing the body component; and
displaying the input component resized to a predetermined size.

2. The method of claim 1, wherein the dividing step comprises classifying a component of the analyzed Web page set to a larger size than a display size of the display as the body component.

3. The method of claim 2, wherein the dividing step comprises classifying a component of the analyzed Web page set to a size equal to or smaller than the display size of the display as the input component.

4. The method of claim 1, wherein the displaying of the body component comprises displaying a portion of the body component corresponding to a display size of the predetermined area without resizing the portion of the body component.

5. The method of claim 1, wherein the displaying of the input component comprises displaying the input component resized according to a display size of the display of the portable terminal.

6. The method of claim 1, further comprising:
receiving a shifted display request for the body component displayed in the predetermined area; and
displaying the body component shifted in the predetermined area according to the shifted display request.

7. The method of claim 6, wherein the shifted displaying of the body component comprises resizing or non resizing of the body component in the course of the shifted displaying.

8. A portable terminal for displaying a Web page in a display unit, comprising:
a memory; and
a controller coupled to the memory and configured to:
download a Web page in response to an access request;
classify the downloaded Web page into a body component and an input component by parsing the Web page and storing them in the memory; and
display the body component in a predetermined fixed area of a display of the portable terminal without resizing the body component, and display the input component resized to a predetermined size, wherein the predetermined fixed area set by user.

9. The portable terminal of claim 8, wherein the controller classify the body component to a larger size than a display size of the display unit.

10. The portable terminal of claim 8, wherein the controller classify the input component to a smaller size than the display size of the display unit.

11. The portable terminal of claim 8, wherein the controller is further configured to: receive a shifted display request for the body component displayed in the predetermined fixed area; and display the body component shifted in the predetermined fixed area according to the shifted display request.

12. the portable terminal of claim 11, wherein the shifted displaying of the body component comprises resizing of the body component in the course of the shifted displaying.
